# EUROPÄISCHE PATENTANMELDUNG

(11) **EP 3 246 538 A1**
(43) Veröffentlichungstag der Anmeldung: **22.11.2017**
(21) Anmeldenummer: 16170145.3
(22) Anmeldetag: 18.05.2016
(51) Int. Cl.: F01K 23/16, F16D 23/10

(54) **VERFAHREN ZUM KUPPELN EINER DAMPFTURBINE UND EINER GASTURBINE MIT EINEM GEWÜNSCHTEN DIFFERENZWINKEL UNTER NUTZUNG EINER SOLLBESCHLEUNIGUNG**

(71) Anmelder: Siemens Aktiengesellschaft, 80333 München (DE)
(72) Erfinder: Borowski, Marc, 47445 Moers (DE); Zimmer, Gerta, 45468 Mülheim an der Ruhr (DE)

(57) **Zusammenfassung**

Die Erfindung betrifft ein Verfahren zum Kuppeln einer Dreheinrichtung, insbesondere einer Dampfturbine (5),und einer Welleneinrichtung, insbesondere einer Gasturbine (2), mit folgenden Schritten:
- Erfassen eines Differenzwinkels (7) zwischen Welleneinrichtung (2) und Dreheinrichtung (5);
- Erfassen einer Differenzgeschwindigkeit (8) zwischen Welleneinrichtung (2) und Dreheinrichtung (5);
- Vorhersage eines Kuppelwinkels, mit dem Dreheinrichtung (5) und Welleneinrichtung (2) gekuppelt würden, wenn die Dreheinrichtung (5) mit einer bekannten Beschleunigung bis zum Beginn des Einkuppelns beschleunigt würde;
- Vergleich des vorhergesagten Kuppelwinkels (10) mit einem Zielkuppelwinkel (11) und daraus Berechnung einer Sollbeschleunigung (9) derart, dass der vorhergesagte Kuppelwinkel (10) mit dem Zielkuppelwinkel (11) übereinstimmt.

## Beschreibung

In kombinierten Gas- und Dampfkraftwerken wird zunächst durch die Verbrennung von Gas die Gasturbine angetrieben. Mit der Abwärme der Gasturbine wird Dampf für eine Dampfturbine erzeugt. Beim Anfahren des Gas- und Dampfkraftwerks wird daher zuerst die Gasturbine betrieben. Die Dampfturbine kann erst zugeschaltet werden, wenn genügend Dampf bereitgestellt wird. Bei Einwellenanlagen sind Gasturbine und Generator fest auf einer Welle verbunden. Die Dampfturbine ist in der gleichen Achse angeordnet und kann über eine Kupplung angeschlossen werden. Es ist daher ein Kuppeln von Dampfturbine und Gasturbine erforderlich.

Der Kuppelwinkel ergibt sich in der Praxis dabei zufällig. Aus der EP 1 911 939 A1 ist es bekannt, den Kuppelwinkel gezielt auszuwählen. Damit ist es möglich einen Kuppelwinkel zu wählen, bei dem die Schwingungsbelastung minimiert ist. Grob gesprochen ist es damit möglich Unwuchten der beiden Turbinen in gewissem Umfang auszugleichen. Gerade im Vergleich zu einer Kupplung, bei der beide Turbinen so gekuppelt sind, dass sich Unwuchten addieren, kann damit eine Reduktion der Schwingungsbelastung erzielt werden. Trotz dieses Vorteils wird dieses Verfahren nicht eingesetzt.

Ein Verfahren zur gezielten Beschleunigung der Dampfturbine mit einem Beschleunigungswert, der aus der Solldrehzahldifferenz abgeleitet wird, die in Abhängigkeit von dem erfassten Differenzwinkel, der Beschleunigung und von einem gewünschten Zielkuppelwinkel gebildet wird ist aus der EP 2 813 675 A1, auch WO 2014/198649 A1, bekannt.

Aus der WO2015/124332 A1 ist ein Verfahren zum Kuppeln einer Dampfturbine und einer Gasturbine mit folgenden Schritten bekannt: 1) Beschleunigung der Dampfturbine bis zu einer Ausgangsdrehzahl, die unterhalb der Drehzahl der Gasturbine liegt; 2) Erfassen eines Differenzwinkels zwischen Gasturbine und Dampfturbine; 3) Beschleunigung der Dampfturbine mit einem Beschleunigungswert, der aus der Solldrehzahldifferenz abgeleitet wird, die in Abhängigkeit von dem erfassten Differenzwinkel, der Beschleunigung und von einem gewünschten Zielkuppelwinkel gebildet wird.

Aufgabe der Erfindung ist es ein alternatives Verfahren zum Kuppeln mit einem gewünschten Kuppelwinkel bereitzustellen. Ebenso soll eine entsprechende Anordnung entwickelt werden.

Wenngleich sich die nachfolgend dargestellte Erfindung grundsätzlich zum Kuppeln von verschiedensten Dreheinrichtungen mit verschiedensten Welleneinrichtungen eignet, wird im Interesse einer anschaulichen Darstellung stets eine Dampfturbine als Beispiel für eine Dreheinrichtung und eine Gasturbine als Beispiel für eine Welleneinrichtung gewählt. Dabei handelt es sich um die aus derzeitiger Sicht wichtigste Anwendung der Erfindung. Weitere Anwendungen sind aber ausdrücklich denkbar. So können etwa verschiedene Teilturbinen gekoppelt werden. Dies ist in Anlagen erforderlich, bei denen ein Teil der Turbine bei Schwachlast nicht betrieben wird und nur bei erhöhter Leistungsanforderung zugefahren wird.

Es wurde erkannt, dass ein Verfahren zum Kuppeln einer Dampfturbine und einer Gasturbine, mit folgenden Schritten bereitzustellen ist:
Erfassen eines Differenzwinkels zwischen Gasturbine und Dampfturbine;
Erfassen einer Drehzahldifferenz zwischen Gasturbine und Dampfturbine;
Vorhersage eines Kuppelwinkels, mit dem Dampfturbine und Gasturbine gekuppelt würden, wenn die Dampfturbine mit einer bekannten Beschleunigung bis zum Beginn des Einkuppelns beschleunigt würde;
Vergleich des vorhergesagten Kuppelwinkels mit einem Zielkuppelwinkel und daraus Berechnung einer Sollbeschleunigung derart, dass der vorhergesagte Kuppelwinkel mit dem Zielkuppelwinkel übereinstimmt.

Es genügt messtechnisch die Erfassung von Differenzwinkel und Differenzgeschwindigkeit zwischen Gasturbine und Dampfturbine vorzunehmen. Die Vorhersage des Kuppelwinkels der sich ergeben würde, kann rechnerisch erfolgen.

Durch den Vergleich des vorhergesagten Kuppelwinkels mit dem Zielkuppelwinkel kann in einfacher Weise eine Sollbeschleunigung berechnet werden, derart, dass der vorhergesagte Kuppelwinkel mit dem Zielkuppelwinkel übereinstimmt.

Zu beachten ist, dass die zur Vorhersage genutzte bekannte Beschleunigung kein gemessener Wert sein muss. Es ist also nicht erforderlich die Beschleunigung der Dampfturbine zu messen.

In einer Ausführungsform wird bei der Vorhersage unterstellt, dass der Beginn des Einkuppelns erfolgt, sobald die Drehzahl der Dampfturbine die Drehzahl der Gasturbine erreicht oder um einen gewählten Wert übersteigt. Damit können die Verhältnisse bei einer Selbstsynchronisierenden Schaltkupplung wiedergegeben werden. Derartige Kupplungen sind mechanisch so aufgebaut, dass sobald die Drehzahl der Dampfturbine geringfügig höher ist als die Drehzahl der Gasturbine die Kupplung erfolgt. Wird also eine Selbstsynchronisierende Schaltkupplung genutzt, beginnt automatisch bei einer bestimmten, sehr niedrigen, Drehzahldifferenz das Einkuppeln. Daher ist es günstig eben dies bei der Vorhersage zu unterstellen.

In einer Ausführungsform dient als Wert für die bekannte Beschleunigung die errechnete Sollbeschleunigung. Wie schon erwähnt ist eine Messung der bekannten Beschleunigung nicht erforderlich. Im Regelfall lassen sich sehr gute Resultate erzielen wenn für die bekannte Beschleunigung der als Sollbeschleunigung errechnete Wert gewählt wird

In einer Ausführungsform wird die Dampfturbine bis zu einer Ausgangsdrehzahl, die bevorzugt unterhalb der Drehzahl der Gasturbine liegt, mit einer gewählten Beschleunigung unabhängig vom angestrebten Zielkuppelwinkel beschleunigt. Damit kann die Beschleunigung bis dahin einfach erreicht werden ohne an dem im Stand der Technik üblichen Verfahren etwas ändern zu müssen.

In einer Ausführungsform ist die gewählte Beschleunigung konstant. Es ist oft sinnvoll bis zur Ausgangsdrehzahl weitgehend konstant zu beschleunigen.

In einer Ausführungsform wird die Vorhersage des Kuppelwinkels bei Erreichen der Ausgangsdrehzahl mit der gewählten Beschleunigung begonnen. Wie dargelegt ist es nicht erforderlich die bekannte Beschleunigung, die zur Vorhersage des Kuppelwinkels genutzt wird, messtechnisch zu erfassen. Vielmehr wird oft mit der errechneten Sollbeschleunigung gearbeitet. Zu Beginn der Vorhersage ist dafür allerdings noch kein Wert vorhanden, es sei denn dieser würde gesetzt. Sofern, wie in den vorstehenden Ausführungsformen, zu Beginn der Vorhersage des Kuppelwinkels die Dampfturbine mit der gewählten Beschleunigung - oft einer konstanten Beschleunigung - beschleunigt wird, ist es sinnvoll, dass die gewählte Beschleunigung als bekannte Beschleunigung dient. Es bleibt dabei hinzunehmen, dass die gewählte Beschleunigung oft ein Sollwert ist und es nicht gesichert ist, dass die Dampfturbine tatsächlich mit der gewählten Beschleunigung beschleunigt wird. Die Abweichungen sind aber gering genug, so dass das Verfahren dennoch funktioniert.

In einer Ausführungsform liegt die Ausgangsdrehzahl etwa 0,5 Hz bis etwa 1,5 Hz unterhalb der Drehzahl der Welleneinrichtung, bevorzugt etwa 0,9 Hz bis etwa 1,1 Hz. Es hat sich gezeigt, dass mit diesen Werten einerseits zügig bis zur Ausgangsdrehzahl beschleunigt werden kann und andererseits ein zügiges und zielgerichtetes Kuppeln mit einem gewünschten Differenzwinkel möglich ist.

In einer Ausführungsform wird bei der Berechnung der Sollbeschleunigung beachtet, dass beim Einkuppeln der Differenzwinkel um einen Kupplungsverdrehwinkel verändert wird. Der Kupplungsverdrehwinkel ergibt sich beim Einkuppeln aus mechanischen Gründen, die hier nicht näher ausgeführt werden. Vorliegend genügt es zu wissen, dass der Kupplungsverdrehwinkel auftritt und von der jeweiligen Kupplung abhängt. Im Übrigen ist der Kupplungsverdrehwinkel konstant und kann daher bei der Berechnung problemlos berücksichtigt werden.

In einer Ausführungsform wird die Sollbeschleunigung in eine Solldrehzahl gewandelt, die an eine Turbinensteuereinheit übergeben wird. Durch geeignete Integration der Sollbeschleunigung wird die Solldrehzahl erhalten.

An dieser Stelle soll kurz auf die Turbinensteuereinheit eingegangen werden. Die Turbinensteuereinheit regelt über die Stellung eines Ventils, welches die Dampfzufuhr zur Dampfturbine einstellt, die Geschwindigkeit der Turbine. Die verbreiteten Turbinensteuereinheiten benötigen als Eingangssignal eine Solldrehzahl. Davon abhängig sorgt die Turbinensteuereinheit für eine Beschleunigung der Turbine. Durch die Übergabe der Solldrehzahl wird also wie gewünscht die Sollbeschleunigung bewirkt. Der Weg, wenn man so will Umweg, aus der Sollbeschleunigung zunächst eine Solldrehzahl zu ermitteln, ist lediglich dem Umstand geschuldet übliche Turbinensteuereinheiten verwenden zu können.

Die Erfindung betrifft auch eine entsprechende Anordnung. Die Anordnung ist in einer Ausführungsform ausgebildet, das oben beschriebene Verfahren durchzuführen. Zur Vermeidung von Wiederholungen wird hinsichtlich der Anordnung auf die obigen Ausführungen zum Verfahren verwiesen. Im Allgemeinen genügt es die Programmierung entsprechend anzupassen.

In einer Ausführungsform der Anordnung kann die Erfassung des Differenzwinkels mit einer Taktung von etwa 4 ms bis etwa 20 ms oder niedriger bestimmt werden. Dabei handelt es sich um eine Modifikation bekannter Anordnungen, die zur Durchführung des oben beschriebenen Verfahrens sehr hilfreich ist. Damit kann der Differenzwinkel besser bestimmt werden.

Die Erfindung soll unter Nutzung von Figuren nachfolgend anhand eines Ausführungsbeispiels näher erläutert werden.

Dabei zeigen
- Fig. 1: eine Einwellenanlage eines Gas- und Dampfkraftwerks
- Fig. 2: den Ablauf der Vorhersage des Kuppelwinkels und die Regelung der Sollbeschleunigung
- Fig. 3: die Regelung der Sollbeschleunigung und das Zusammenwirken mit einer Turbinensteuereinheit
- Fig. 4: eine Simulation des gemessenen Differenzwinkels und des vorhegesagten Kuppelwinkels
- Fig. 5: eine Simulation der geregelten Beschleunigung

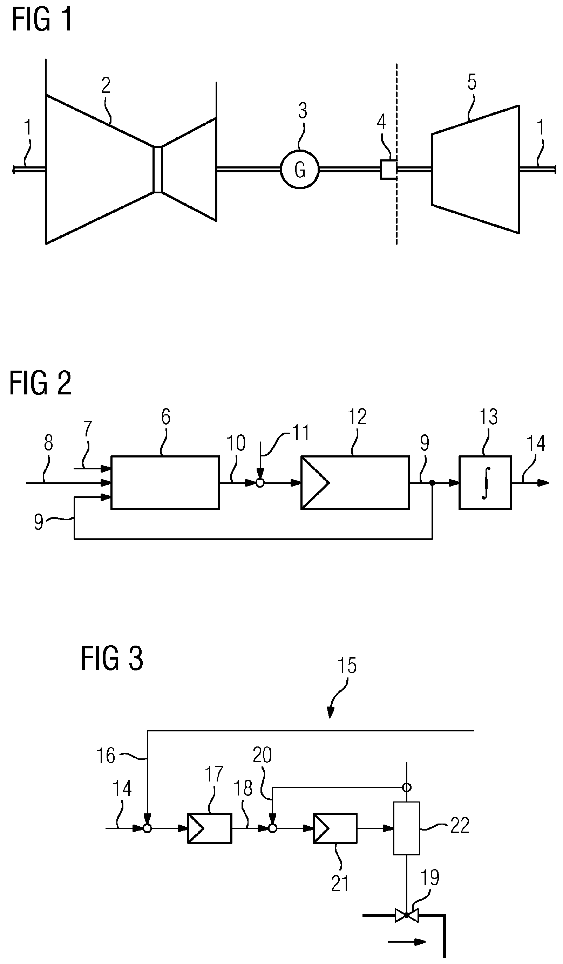

In Figur 1 sind die für die vorliegende Erfindung wesentlichen Komponenten eines kombinierten Gas- und Dampfkraftwerks gezeigt. Als wesentliches Merkmal ist die Welle 1 zu erkennen. An dieser ist eine Gasturbine 2 befestigt, die sich mit der Welle 1 dreht. Ferner ist ein von der Gasturbine 2 angetriebener Generator 3 zu erkennen.

Die Welle 1 wird von einer Kupplung 4 unterbrochen. Die Kupplung 4 ist als selbstsynchronisierende Schaltkupplung ausgeführt.

Im sich an die Kupplung 4 anschließenden Teil der Welle 1 befindet sich die Dampfturbine 5. Die Kupplung 3 hat also die Aufgabe die Dampfturbine 5 mit der Gasturbine 2 zu kuppeln. Dabei ist klar, dass es sich im Grunde um eine Kupplung der jeweiligen Wellenteile der Welle 1 handelt. Da diese aber fest mit der Gasturbine beziehungsweise der Dampfturbine verbunden sind, ist es sowohl sachlich richtig wie auch einer anschaulichen Darstellung geschuldet von einer Kupplung der Dampfturbine 5 mit der Gasturbine 2 zu sprechen.

Figur 2 zeigt den Ablauf der Vorhersage des Kuppelwinkels und die Regelung der Sollbeschleunigung auf. In ein Vorhersagemodul 6 fließen ein erfasster Differenzwinkel 7 zwischen Gasturbine 2 und Dampfturbine 5 ein sowie eine erfasste Differenzgeschwindigkeit 8 zwischen Gasturbine 2 und Dampfturbine 5. Ferner fließt eine Sollbeschleunigung 9 ein, auf die nachfolgend zurückgekommen wird.

Aus dem Differenzwinkel 7, der Differenzgeschwindigkeit 8 und der Sollbeschleunigung 9 wird im Vorhersagemodul 6 ein Kuppelwinkel 10 ermittelt, der sich ergeben würde, wenn mit der Sollbeschleunigung 9 die Dampfturbine 5 beschleunigt würde, bis die Kupplung 4 mit dem Einkuppeln beginnt. Dabei ist zu beachten, dass die Kupplung 4 aufgrund ihrer Ausführung als selbstsynchronisierende Schaltkupplung bauartbedingt mit dem Einkuppeln beginnt, sobald die Drehzahl der Dampfturbine 5 die Drehzahl der Gasturbine 2 geringfügig übersteigt.

Der sich aus der Vorhersage ergebende vorhergesagte Kuppelwinkel 10 wird mit einem vorgegebenen Zielkuppelwinkel 11 verglichen. Aus der Differenz vom vorhergesagten Kuppelwinkel 10 zum Zielkuppelwinkel 11 wird im Beschleunigungsmodul 12 die Sollbeschleunigung 9 ermittelt. Wie bereits erwähnt wird diese Sollbeschleunigung 9 das Vorhersagemodul 6 übergeben. Darüber hinaus wird die Sollbeschleunigung 9 an einen Integrator 13 übergeben. Im Integrator 13 wird aus der Sollbeschleunigung 9 durch eine Integration der Sollbeschleunigung 9 über die Zeit bis zum Beginn des Einkuppelns eine Solldrehzahl 14 der Dampfturbine ermittelt.

Die Solldrehzahl 14 wird, wie in Fig. 3 ersichtlich, an eine Turbinensteuereinheit 15 übergeben. Derartige Turbinensteuereinheiten sind aus dem Stand der Technik bekannt. Aus Gründen der Vollständigkeit dennoch eine kurze Darstellung der Turbinensteuereinheit 15. Die Turbinensteuereinheit kann die Solldrehzahl 14 empfangen und mit einer gemessenen Dampfturbinendrehzahl 16 vergleichen. Im Geschwindigkeitsmodul 17 wird aus dem Vergleich der Solldrehzahl 14 mit der Dampfturbinendrehzahl 16 eine Sollstellung 18 eines Dampfturbinenventils 19 ermittelt.

Die Sollstellung 18 wird mit der erfassten Dampfturbinenventilstellung 20 verglichen. Davon ausgehend wird von einem Stellungsmodul 21 ermittelt, wie eine Verstelleinheit 22 das Dampfturbinenventil 19 einstellt.

Obige Darstellung macht ersichtlich, dass das neue Verfahren zum Kuppeln unter Nutzung einer Sollbeschleunigung sich leicht in vorhandene Steuerkonzepte integrieren lässt.

Die Darstellung ist als abstrakte Darstellung der Schritte anzusehen. Die Aussage ein Schritt erfolge in einem Modul und ein weiterer Schritt in einem anderen Modul bedeutet nicht, dass es sich bei den Modulen zwingend um unterschiedliche Bauteile handeln muss. So kann vieles auf einer gemeinsamen Rechnereinheit ausgeführt werden. Es geht vielmehr um den logischen Ablauf der Schritte.

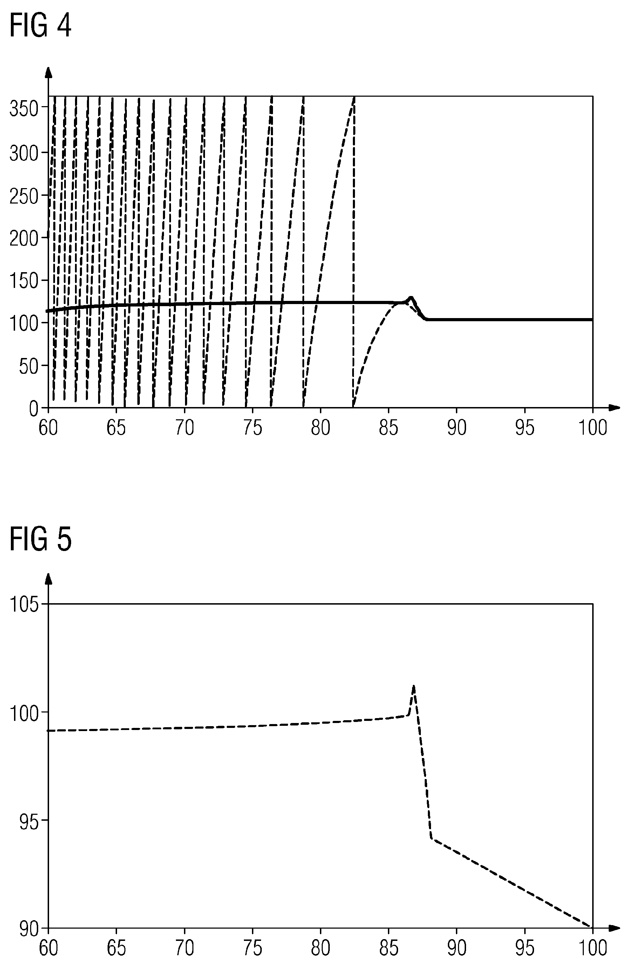

In Figur 4 ist der zeitliche Verlauf des erfassten Differenzwinkels und des vorhergesagten Kuppelwinkels dargestellt. Auf der Rechtswertache ist die Zeit in Sekunden aufgetragen und auf der Hochwertachse der Winkel in Grad. Den Verlauf des erfassten Differenzwinkels zeigt die gestrichelte Linie und den vorhegesagten Kuppelwinkel die durchgezogene Linie.

In Figur 5 ist eine Simulation der geregelten Beschleunigung über der Zeit aufgetragen. Auf der Rechtswertachse ist die Zeit in Sekunden aufgetragen. Auf der Hochwertachse ist die Beschleunigung in Prozent zu einem willkürlichen Beschleunigungswert aufgetragen. Der starke Abfall zwischen 85 s und 90 s ist dem Einkuppeln geschuldet. Der weitere Verlauf der Kurve ist nicht mehr maßgeblich. Nach dem Einkuppeln haben Dampfturbine 5 und Gasturbine 2 naturgemäß die selbe Geschwindigkeit.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Kuppeln einer Dreheinrichtung, insbesondere einer Dampfturbine (5),
und einer Welleneinrichtung,
insbesondere einer Gasturbine (2),
mit folgenden Schritten:
- Erfassen eines Differenzwinkels (7) zwischen Welleneinrichtung (2) und Dreheinrichtung (5);
- Erfassen einer Differenzgeschwindigkeit (8) zwischen Welleneinrichtung (2) und Dreheinrichtung (5);
- Vorhersage eines Kuppelwinkels, mit dem Dreheinrichtung (5) und Welleneinrichtung (2) gekuppelt würden, wenn die Dreheinrichtung (5) mit einer bekannten Beschleunigung bis zum Beginn des Einkuppelns beschleunigt würde;
- Vergleich des vorhergesagten Kuppelwinkels (10) mit einem Zielkuppelwinkel (11) und daraus Berechnung einer Sollbeschleunigung (9) derart, dass der vorhergesagte Kuppelwinkel (10) mit dem Zielkuppelwinkel (11) übereinstimmt.

2. Verfahren nach Anspruch 1,
**dadurch gekennzeichnet, dass**
bei der Vorhersage unterstellt wird, dass der Beginn des Einkuppelns erfolgt, sobald die Drehzahl der Dreheinrichtung (5) die Drehzahl der Welleneinrichtung (2) erreicht oder um einen gewählten Wert übersteigt.

3. Verfahren nach einem der vorhergehenden Ansprüche,
**dadurch gekennzeichnet, dass**
als Wert für die bekannte Beschleunigung die errechnete Sollbeschleunigung (9) dient.

4. Verfahren nach einem der vorhergehenden Ansprüche,
**dadurch gekennzeichnet, dass**
die Dreheinrichtung (5) bis zu einer Ausgangsdrehzahl, die bevorzugt unterhalb der Drehzahl der Welleneinrichtung (2) liegt, mit einer gewählten Beschleunigung unabhängig vom angestrebten Zielkuppelwinkel (11) beschleunigt wird.

5. Verfahren nach dem vorhergehenden Anspruch,
**dadurch gekennzeichnet, dass**
die gewählte Beschleunigung konstant ist.

6. Verfahren nach einem der Ansprüche 3 bis 5,
**dadurch gekennzeichnet, dass**
die Vorhersage des Kuppelwinkels bei Erreichen der Ausgangsdrehzahl mit der gewählten Beschleunigung begonnen wird.

7. Verfahren nach einem der Ansprüche 3 bis 6,
**dadurch gekennzeichnet, dass**
die Ausgangsdrehzahl etwa 0,5 Hz bis etwa 1,5 Hz unterhalb der Drehzahl der Welleneinrichtung (2) liegt, bevorzugt etwa 0,9 Hz bis etwa 1,1 Hz.

8. Verfahren nach einem der vorhergehenden Ansprüche,
**dadurch gekennzeichnet, dass**
bei der Berechnung der Sollbeschleunigung (9) beachtet wird, dass beim Einkuppeln der Differenzwinkel um einen Kupplungsverdrehwinkel verändert wird.

9. Verfahren nach einem der vorgehenden Ansprüche,
**dadurch gekennzeichnet, dass**
die Sollbeschleunigung (9) in eine Solldrehzahl (14) gewandelt wird, die an eine Turbinensteuereinheit (15) übergeben wird.

10. Anordnung mit einer Welleneinrichtung,
insbesondere einer Gasturbine (2),
und einer Dreheinrichtung,
insbesondere einer Dampfturbine (5),
mit einer Kupplung (4) zum Kuppeln von Welleneinrichtung (2) und Dreheinrichtung (5), aufweisend:
eine Einrichtung zum Erfassen des Differenzwinkels (7) zwischen Welleneinrichtung (2) und Dreheinrichtung (5);
eine Einrichtung zum Erfassen der Differenzgeschwindigkeit (8) zwischen Welleneinrichtung (2) und Dreheinrichtung (5);
eine Einrichtung (19) zum Beschleunigen der Dreheinrichtung(5) mit einem Beschleunigungswert;
Mittel (6) zur Vorhersage aus dem erfassten Differenzwinkel (7), der erfassten Differenzgeschwindigkeit (8) und einer bekannten Beschleunigung einen Kuppelwinkel (10) vorherzusagen, der sich ergeben würde, wenn die Dreheinrichtung (5) mit der bekannten Beschleunigung bis zum Beginn des Einkuppelns beschleunigt würde;
Mittel (12), die den vorhergesagten Kuppelwinkel (10) mit einem Zielkuppelwinkel (11) vergleichen und daraus eine Sollbeschleunigung (9) derart, dass der vorhergesagte Kuppelwinkel (10) mit dem Zielkuppelwinkel (11) übereinstimmt, berechnen können.

11. Anordnung nach dem vorhergehenden Anspruch,
**dadurch gekennzeichnet, dass**
die Anordnung zur Durchführung eines Verfahrens nach einem der Ansprüche 1 bis 9 ausgebildet ist.

12. Anordnung nach einem der Ansprüche 10 oder 11,
**dadurch gekennzeichnet, dass**
die Erfassung des Differenzwinkels (7) mit einer Taktung von etwa 4 ms bis etwa 20 ms oder niedriger bestimmt werden kann.
